# EUROPEAN PATENT SPECIFICATION

(11) **EP 2 079 582 B1**
(45) Date of publication and mention of the grant of the patent: **01.11.2017**
(21) Application number: 07803745.4
(22) Date of filing: 12.09.2007
(51) Int. Cl.: B32B 19/00, B32B 5/08, E04B 1/62, E04C 2/16, E04C 2/292, F16L 59/00, F16L 59/02, F16L 59/22

(54) **MANUFACTURING METHOD FOR A LAMINATED MAT OF MINERAL WOOL, AND LAMINATED MAT**
HERSTELLUNGSVERFAHREN FÜR EINE LAMINIERTE MATTE AUS STEINWOLLE UND LAMINIERTE MATTE
PROCÉDÉ DE FABRICATION D'UN TAPIS STRATIFIÉ DE LAINE MINÉRALE, ET TAPIS STRATIFIÉ

(30) Priority: 16.10.2006 FI 20065659
(43) Date of publication of application: 22.07.2009
(73) Proprietor: Paroc Group Oy, 00180 Helsinki (FI)
(72) Inventor: HJELT, Tuomo, 53850 Lappeenranta (FI)
(74) Representative: LEITZINGER OY
(86) International application number: PCT/FI2007/050484
(87) International publication number: WO 2008/046954

(56) References cited:
- EP-A2- 0 017 969
- WO-A1-93/21404
- WO-A1-93/21404
- DE-A1- 4 133 416
- DE-C1- 3 136 935
- DE-C1- 3 136 935
- GB-A- 2 253 184
- GB-A- 2 279 293
- US-A- 4 025 680
- US-A- 5 262 217

## Description

The invention relates to a manufacturing method for a laminated mat of mineral wool. The method comprises a first step of making a mineral wool sheet or mat, wherein fibers settle in a plane substantially lengthwise of the sheet or mat. This sheet or mat is cut for lamellae of a desired width by means of a cutting operation crosswise to a longitudinal direction of the sheet or mat. The lamellae are rotated through 90° about the longitudinal axis thereof and placed side by side for a laminated structure of a desired length, which is topped with a covering material which holds the lamellae together to build a laminated mat. The invention relates also to a laminated mat, which is made of lamellae cut from a mineral wool sheet or mat and rotated through 90° about the longitudinal axis thereof, and placed side by side for a laminated structure. The laminated structure is topped with a covering material which holds the lamellae together to build a laminated mat.

It is known in the prior art, such as EP 0 017 969 A2 and DE 41 33 416 A1, to manufacture laminated mats by cutting from mineral wool sheets or mats, in which the fibers have settled in a position substantially lengthwise of the sheet or mat (orientation 0°), lamellae of a desired width by a cutting operation crosswise to a longitudinal direction of the sheet or mat. This has been followed by rotating these lamellae through 90° and bonding the same to each other for a laminated mat in which the fibers extend at a substantially right angle (orientation 90°) relative to the major surfaces of the laminated mat. The purpose of this procedure has been to accomplish as high a compression strength as possible at a right angle relative to the major surfaces of laminated mats. However, laminated mats made by this prior art method have a problem of having also a higher thermal conductivity, thus resulting in a respectively lower insulation capacity.

On the other hand, a mineral wool sheet or mat, in which the orientation of fibers is substantially 0°, presents a lower thermal conductivity and thereby a better insulation capacity. Again, this leads to a product with a lower compression strength.

Accordingly, there is a demand for a product which would have an insulation capacity better than that of a conventional laminated mat and a compression strength better than that of a mineral wool sheet or mat. Such a product is particularly relevant as an insulation making up an exterior surface that should withstand at least mild impacts and compression.

EP 0928858 A2 discloses a method and apparatus for making lamellae. These lamellae are used in a lightweight building sheet. In this solution, however, the lamellae are not used for making a laminated mat, but the lamellae are only used as reinforcements on one side of a building sheet. In addition, the lamellae of this prior known solution come in a trapezoidal configuration, nor does the cited publication mention anything about the orientation or direction of fibers.

A laminated mat manufacturing method according to the invention, developed for solving the problem existing in the prior art, is characterized by what is presented in the characterizing section of claim 1. On the other hand, a laminated mat according to the invention is characterized by what is presented in the characterizing section of claim 4.

A laminated mat of the invention finds one important application in heating, plumbing and air conditioning installations. Another practical application for the laminated mat is in the insulations of e.g. furnaces and the like.

The invention will now be described more closely with reference to the accompanying drawings, in which:
- Fig. 1: shows schematically a laminated mat of the prior art and its composition,
- Fig. 2: shows one method of the invention for making a laminated mat, and
- Fig. 3: shows in a schematic view by way of example a relationship between fiber orientation and thermal conductivity.

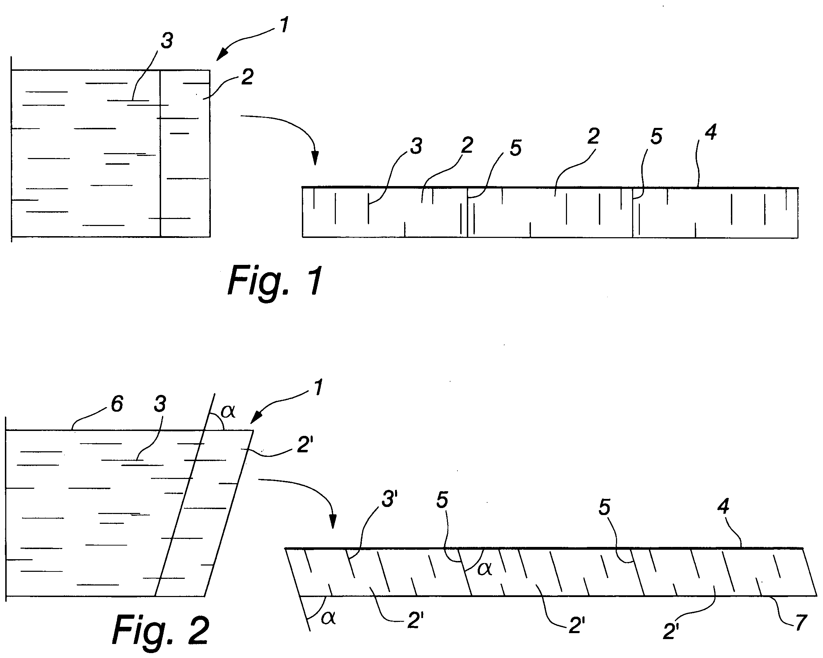

Fig. 1 shows a traditional manufacturing method for a laminated mat. In the lefthand segment of fig. 1 is depicted, in a lateral view, the end portion of a crosscut mineral wool sheet 1, said sheet being cut for a lamella 2, having its width consistent with a desired thickness of the laminated mat, substantially perpendicularly to a longitudinal direction of the sheet, for example by sawing. In the sheet 1, fibers 3 have settled during the manufacturing process in a plane substantially lengthwise of the sheet 1 (orientation 0°). After a cutting operation, the lamella 2 is rotated through 90° about a longitudinal axis of the lamella (in the case of fig. 1, about an axis normal to the surface of paper) to a position shown in the right-hand segment of fig. 1, in which the fibers extend in a direction substantially perpendicular to the major surfaces of the laminated mat (orientation 90°). A desired number of the lamellae 2 are placed side by side for a laminated structure of a desired length, and the laminated structure is then topped with a covering material 4. The covering material consists typically of a aluminum paper laminate, featuring an external surface of aluminum and an internal surface of polyethylene, with a reinforcement mesh therebetween. The covering material 4 is bonded to the lamellae 2 preferably by means of a heated press roll, which presses the covering material 4 against the top surface of the lamellae 2 and in response to which (to heat produced thereby) the polyethylene layer melts, thus bonding to the surface of the lamellae. After solidification of the polyethylene layer, the covering material stays firmly attached to the lamellae. This results in a laminated mat, which is finally rolled up for a roll of laminated mat which is easier to handle. Such laminated mats are manufactured in a variety of thicknesses, typically in thicknesses of 20 mm to 100 mm. This solution provides a good compression strength in the direction perpendicular to the major surfaces of a laminated mat, but at the same time the thermal conductivity thereof has increased and thereby the insulation capacity has decreased as compared to a conventional mineral wool mat in which the fibers lie in a plane substantially lengthwise of the laminated mat.

Fig. 2 shows schematically a method, which provides a simple way of regulating the qualities of a laminated mat as desired according to the intended application. A solution of the invention comprises cutting a mineral wool sheet 1, wherein fibers 3 lie in a plane substantially lengthwise of the mineral wool sheet, for a lamella 2' by means of an angle cutting operation, whereby the cutting proceeds at an angle α in a cutting motion substantially perpendicular to the plane of a major surface 6 of the sheet 1 in terms of a longitudinal direction of the sheet 1, i.e. in the presentation of fig. 2 in a direction substantially normal to the plane of paper. The angle α is preferably within the range of 20-70° and even more preferably within the range of 30-60°. When the lamellae 2' produced by angle cutting are rotated through 90° and placed in succession, fibers 3' will settle, relative to the major surfaces of the laminated mat, at an angular orientation α which is substantially identical to the cutting angle α. Other than that, the laminated mat is established the same way as in the prior art, by bonding the lamellae 2, 2' to each other with the help of a covering material 4. The joints 5 between the lamellae 2, 2' are typically left unbound, and the bonding of the lamellae is based solely on the use of the covering material 4. As a result, the solution of the invention enables also a major surface 7, opposite to the major surface topped by the covering material 4, to be covered e.g. with a gauze capable of precluding the opening of joints 5 while handling the laminated mat and thereby improving the product in terms of handiness and stability.

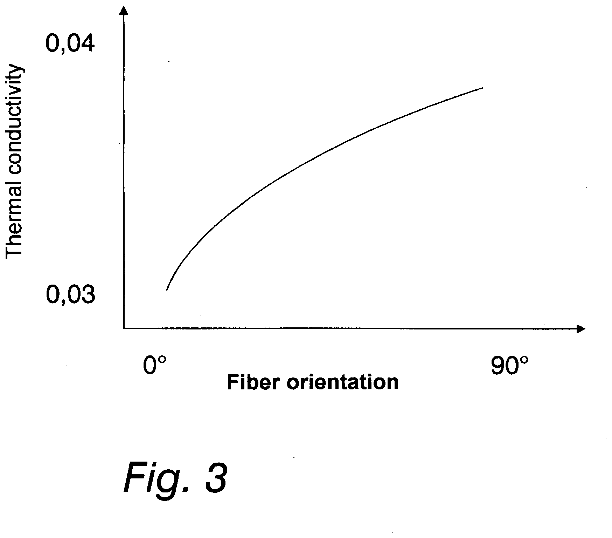

The solution of the invention offers a simple way of regulating the qualities of a laminated mat according to the intended application as optimally as possible in terms of both compression strength and thermal conductivity, whereby the laminated mat of a given standard thickness can be provided with different properties by changing the cutting angle α without having to change the density of the lamellae. In a traditional solution, the changing of properties is practically based on changing the density of lamellae for achieving a desired quality. Fig. 3 shows in a graphic representation the change in thermal conductivity as a function of fiber orientation. The graph of fig. 3 is only presented as an illustrative example, based on preliminary measuring results regarding thermal conductivity values in various fiber orientations, nor is it by any means intended to limit the present invention in terms of its scope of protection. The graph indicates that the thermal conductivity is at its lowest in orientation 0° and at its highest in orientation 90°.

As prior known, the compression strength is at its highest in orientation 90° and at its lowest in orientation 0°.

## Claims

1. A manufacturing method for a laminated mat of mineral wool, which comprises a first step of making a mineral wool sheet or mat (1), wherein fibers (3) settle substantially lengthwise of the sheet or mat, said sheet or mat being cut for lamellae (2') of a desired width by means of a cutting operation crosswise relative to a longitudinal direction of the sheet or mat, said lamellae (2') being rotated through 90° about the longitudinal axis thereof and placed side by side for a laminated structure, which is topped with a covering material (4) which holds the lamellae (2') together to build a laminated mat with a joint (5) between adjacent lamellae (2') remaining unbound,
**characterized in that** lamellae (2') are cut from the mineral wool sheet or mat (1) by angle cutting, in which the cut edge of a lamella (2') forms an angle α within the range of 20-70° relative to a longitudinal plane of the sheet or mat.

2. A method as set forth in claim 1, **characterized in that** the angle α formed by the cut edge of a lamella is within the range of 30-60°.

3. A method as set forth in claim 1 or 2, **characterized in that** the covering material (4) comprises the use of an aluminum paper laminate, featuring an external surface of aluminum and an internal surface of polyethylene, with a reinforcement mesh therebetween.

4. A laminated mat, which is made of lamellae (2') cut from a mineral wool sheet or mat and rotated through 90° about the longitudinal axis thereof, and placed side by side for a laminated structure which is topped with a covering material (4) which holds the lamellae (2') together to build a laminated mat with a joint (5) between adjacent lamellae (2') remaining unbound to allow rolling of the mat, **characterized in that** lamellae (2') have been cut from the mineral wool sheet or mat (1) by angle cutting, in such a way that the cut edge thereof forms an angle α within the range of 20-70° relative to a longitudinal plane of the sheet or mat (1), whereby the lamellae (2'), having been rotated through 90° and being placed in succession such that the successive lamellae (2') abut each other at joints (5), the unbound joints forming essentially the same angle α as the cut edges, have fibers (3) disposed at an angle α essentially within the range of 20-70° relative to a surface plane of the laminated mat consisting of the lamellae (2').

5. A laminated mat as set forth in claim 4, **characterized in that** the angle α formed by the cut edge of a lamella is within the range of 30-60°.

6. The use of a laminated mat as set forth in claim 4 or 5 for heating, plumbing and air-conditioning installations.

## Patentansprüche

1. Herstellungsverfahren für eine laminierte Matte aus Steinwolle, die einen ersten Schritt des Herstellens eines Steinwolleflächengebildes oder einer -matte (1) umfasst, wobei sich Fasern (3) im Wesentlichen in Längsrichtung des Flächengebildes oder der Matte absetzen, wobei das Flächengebilde oder die Matte in Lamellen (2') einer gewünschten Breite mittels eines Schneidvorgangs quer zu einer Längsrichtung des Flächengebildes oder der Matte geschnitten werden, wobei die Lamellen (2') um 90° um die Längsachse davon gedreht und nebeneinander für eine laminierte Struktur angeordnet werden, die mit einem Abdeckmaterial (4) abgedeckt ist, das die Lamellen (2') zusammenhält, um eine laminierte Matte mit einer Verbindungsstelle (5) zwischen benachbarten Lamellen (2') zu bilden, die unverbunden bleiben,
**dadurch gekennzeichnet, dass** die Lamellen (2') aus einem Steinwolleflächengebilde oder einer -matte (1) durch Schrägschneiden geschnitten werden, wobei die Schneidkante einer Lamelle (2') einen Winkel α im Bereich von 20 bis 70° in Bezug auf eine Längsebene des Flächengewebes oder der Matte bildet.

2. Verfahren nach Anspruch 1, **dadurch gekennzeichnet, dass** der Winkel α, der durch die Schneidkante einer Lamelle gebildet wird, im Bereich von 30 bis 60° liegt.

3. Verfahren nach Anspruch 1 oder 2, **dadurch gekennzeichnet, dass** das Abdeckmaterial (4) die Verwendung eines Aluminiumpapierlaminats umfasst, das eine äußere Oberfläche aus Aluminium und eine innere Oberfläche aus Polyethylen mit einem Verstärkungsgitter dazwischen aufweist.

4. Laminierte Matte, die aus Lamellen (2') hergestellt ist, die aus einem Steinwolleflächengebilde oder einer -matte hergestellt und um 90°um die Längsachse davon gedreht sind und nebeneinander für eine laminierte Struktur angeordnet sind, die mit einem Abdeckmaterial (4) abgedeckt ist, das die Lamellen (2') zusammenhält, um eine laminierte Matte mit einer Verbindungsstelle (5) zwischen benachbarten Lamellen (2') zu bilden, die unverbunden bleiben, um ein Rollen der Matte zu ermöglichen, **dadurch gekennzeichnet, dass** die Lamellen (2') aus dem Steinwolleflächengebilde oder der -matte (1) durch Schrägschneiden derart geschnitten wurden, dass der Schneidwinkel davon einem Winkel α im Bereich von 20 bis 70° in Bezug auf eine Längsebene des Flächengebildes oder der Matte (1) bildet, wodurch die Lamellen (2'), die um 90° gedreht und hintereinander angeordnet wurden, sodass die aufeinanderfolgenden Lamellen (2') an Verbindungsstellen (5) aneinander angrenzen, wobei die unverbundenen Verbindungsstellen im Wesentlichen den gleichen Winkel α wie die Schneidkanten bilden, Fasern (3) aufweisen, die in einem Winkel α im Wesentlichen im Bereich von 20 bis 70°in Bezug auf eine Oberflächenebene der laminierten Matte, die aus den Lamellen (2') besteht, angeordnet sind.

5. Laminierte Matte nach Anspruch 4, **dadurch gekennzeichnet, dass** der Winkel α, der durch die Schneidkante einer Lamelle gebildet wird, im Bereich von 30 bis 60° liegt.

6. Verwendung einer laminierten Matte nach Anspruch 4 oder 5 für Heizungs-, Sanitär- und Klimaanlagen.

## Revendications

1. Procédé de fabrication d'un tapis stratifié de laine minérale, comprenant une première étape de réalisation d'un drap ou d'un tapis en laine minérale (1), dans lequel des fibres (3) s'étendent substantiellement dans la longueur du drap ou du tapis, ledit drap ou tapis étant découpé en lamelles (2') d'une largeur souhaitée au moyen d'une opération de découpage transversal par rapport à une direction longitudinale du drap ou du tapis, lesdites lamelles (2') étant tournées sur 90° autour de l'axe longitudinal de celui-ci et placées côte à côte pour obtenir une structure stratifiée, laquelle est recouverte d'un matériau de revêtement (4) maintenant les lamelles (2') ensemble pour produire un tapis stratifié avec un joint (5) entre des lamelles (2') adjacentes non reliées,
**caractérisé en ce que** des lamelles (2') sont découpées dans le drap ou le tapis de laine minérale (1) par découpage angulaire, dans lequel le bord coupé d'une lamelle (2') forme un angle α compris entre 20 et 70° par rapport à un plan longitudinal du drap ou du tapis.

2. Procédé selon la revendication 1, **caractérisé en ce que** l'angle α formé par le bord coupé d'une lamelle est compris entre 30 et 60°.

3. Procédé selon la revendication 1 ou 2, **caractérisé en ce que** le matériau de revêtement (4) comprend l'utilisation d'un stratifié de papier et d'aluminium, présentant une surface extérieure en aluminium et une surface intérieure en polyéthylène, avec un maillage de renforcement entre celles-ci.

4. Tapis stratifié constitué de lamelles (2') découpées dans un drap ou un tapis de laine minérale et tournées sur 90° autour de l'axe longitudinal de celui-ci, et placées côte à côte pour obtenir une structure stratifiée recouverte d'un matériau de revêtement (4) maintenant les lamelles (2') ensemble pour produire un tapis stratifié avec un joint (5) entre des lamelles (2') adjacentes non reliées, permettant ainsi de rouler le tapis, **caractérisé en ce que** des lamelles (2') ont été découpées dans le drap ou le tapis de laine minérale (1) par découpage angulaire, de telle façon que le bord coupé de celles-ci forme un angle α compris entre 20 et 70° par rapport à un plan longitudinal du drap ou du tapis (1), moyennant quoi les lamelles (2') ont été tournées sur 90° et sont placées les unes à la suite des autres de manière à ce que les lamelles (2') successives butent les unes contre les autres au niveau de joints (5), les joints non reliés formant essentiellement le même angle α que les bords coupés, des fibres (3) étant disposées sous un angle α essentiellement compris entre 20 et 70° par rapport à un plan de surface du tapis stratifié constitué des lamelles (2').

5. Tapis stratifié selon la revendication 4, **caractérisé en ce que** l'angle α formé par le bord coupé d'une lamelle est compris entre 30 et 60°.

6. Utilisation d'un tapis stratifié selon la revendication 4 ou 5, pour des installations de chauffage, de plomberie et de climatisation.
